# EUROPÄISCHE PATENTSCHRIFT

(11) **EP 2 207 970 B1**
(45) Veröffentlichungstag und Bekanntmachung des Hinweises auf die Patenterteilung: **22.08.2012**
(21) Anmeldenummer: 08803571.2
(22) Anmeldetag: 03.09.2008
(51) Int. Cl.: F15B 15/10

(54) **VERFAHREN ZUR STEUERUNG EINES ELEKTROPNEUMATISCHEN STELLERS**
METHOD FOR THE CONTROL OF AN ELECTROPNEUMATIC POSITIONER
PROCÉDÉ DE COMMANDE D'UN RÉGULATEUR ÉLECTROPNEUMATIQUE

(30) Priorität: 09.10.2007 DE 102007048360
(43) Veröffentlichungstag der Anmeldung: 21.07.2010
(73) Patentinhaber: Robert Bosch GmbH, 70442 Stuttgart (DE)
(72) Erfinder: BAEUERLE, Michael, 71254 Ditzingen-Heimerdingen (DE); RICKEN, Volker, 71706 Markgroeningen (DE)
(86) Internationale Anmeldenummer: PCT/EP2008/061600
(87) Internationale Veröffentlichungsnummer: WO 2009/047056

(56) Entgegenhaltungen:
- WO-A-2007/147661
- DE-A1- 3 121 335
- DE-A1- 3 201 071
- FR-A- 1 423 873
- US-A- 1 908 471

## Beschreibung

### Stand der Technik

EP 0976918 A2 bezieht sich auf eine Aufladeeinrichtung, die als Abgasturbolader ausgeführt ist und ein Wastegate umfasst. Zur Ladedruckregelung am Abgasturbolader wird eine Stellstange eingesetzt, die einen ersten Stangenabschnitt und einen zweiten Stangenabschnitt aufweist. Die beiden Stangenabschnitte der Stellstange sind verdrehbar miteinander gekoppelt und lassen sich gegeneinander verdrehen. Mittels der Stellstange wird ein Hebelarm betätigt, der seinerseits mit dem Wastegate des Abgasturboladers gekoppelt ist.

Die nicht vorveröffentlichte WO-A-2007/147661 betrifft einen pneumatischen Stellantrieb mit integrierter elektropneumatischer Positionsregelung. Der dort offenbarte elektropneumatische Steller dient der Betätigung von Aggregaten einer Verbrennungskraftmaschine und umfasst ein Gehäuse. In diesem Gehäuse ist ein Stellglied beweglich aufgenommen. Dem Stellglied ist ein Steuerschieber zugeordnet, der abhängig von der Relativposition des Stellgliedes eine Druckkammer des Gehäuses belüftet, entlüftet oder verschließt.

Bei heute eingesetzten pneumatischen Stellern werden zum Beispiel ferromagnetische Schieber eingesetzt, die im Kräftegleichgewicht zwischen einer Magnetkraft, die über eine Magnetspule erzeugt wird, und der Kraft einer Feder stehen. Darüber wird eine zur Sollposition des pneumatischen Stellers korrespondierende Lage des Schiebers eingestellt. Treten Relatiwerschiebungen zwischen dem ferromagnetischen Schieber und einer Membranstange auf, erfolgt so lange ein Druckausgleich innerhalb einer Arbeitskammer des elektropneumatischen Stellers, bis die Sollposition erreicht wird. Dieser Druckausgleich in der Arbeitskammer des elektropneumatischen Stellers erfolgt bei Sollwert-Änderungen über ein am elektropneumatischen Steller anliegendes PWM-Signal und auch bei Istwert-Änderungen infolge von von außen auf den elektropneumatischen Steller einwirkenden Störkräften.

Bisher eingesetzte elektropneumatische Steller werden für die unterschiedlichsten Anwendungen bei Kraftfahrzeugen eingesetzt und realisieren unterschiedlich hohe Stellkräfte. So kann über elektropneumatische Steller zum Beispiel im Abgastrakt einer Verbrennungskraftmaschine das Wastegate, einer als Abgasturbolader beschaffenen Aufladeeinrichtung angesteuert werden. Ein Wastegate ist im. Betrieb einer als Abgasturbolader beschaffenen Aufladeeinrichtung sehr großen Kräften, so zum Beispiel hohen Flächenpressungen an der Dichtfläche sowie Pulsationen entsprechend des Betriebspunktes der Verbrennungskraftmaschine, ansgesetzt. Bisher zur Regelung von Wastegates eingesetzte elektropneumatische Steller funktionierten rein unterdruckbasiert. Dies bedeutet, dass der Versorgungsdruck des elektropneumatischen Stellers in der Größe von 0,3 bar von einer bereits zum Betrieb des Bremskraftverstärkers genutzten Unterdruckpumpe bezogen wird. Damit lassen sich Stellkräfte erzielen, die in erster Näherung proportional zur Membranfläche des elektropneumatischen Stellers und zur verfügbaren Druckdifferenz zwischen dem Atmosphärendruck, in der Regel 1 bar, und dem vorhandenen, als Versorgungsdruck dienende Unterdruck, in der Regel etwa 0,3 bar, liegen. Damit ergibt sich eine Druckdifferenz Δp von 0,7 bar, die auf die Membranflächen des elektropneumatischen Stellers wirkt.

Aus der DE 31 21 335 A1 ist ein elektropneumatischer Steller bekannt, der eine Gehäuse aufweist, in dem ein Stellglied angeordnet ist, das über eine Feder mit einer Membranstange verbunden ist. Abhängig von der Relativposition des Stellgliedes wird eine Arbeitskammer im Gehäuse mit Atmosbärendruck beaufschlagt oder entlüftet oder verschlossen.

### Offenbarung der Erfindung

Erfindungsgemäß wird nach Anspruch 1 vorgeschlagen, in einem elektropneumatischen Steller eine Erhöhung der Stellkraft bei geschlossenem Stellglied dadurch zu erzeugen, dass anstelle des Atmosphärendruckes, der in der Regel in der Größenordnung von 1 bar liegt, ein Ladedruck der Aufladeeinrichtung anliegt. Während die erzeugbare Stellkraft bei bisher eingesetzten elektropneumatischen Stellern im Wesentlichen proportional zur Membranfläche des elektropneumatischen Stellers und der Druckdifferenz zwischen dem Versorgungsunterdruck von in der Regel 0,3 bar und dem Atmosphärendruck in der Größenordnung von 1 bar zu 0,7 bar liegt, liegt der Ladedruck, mit dem eine Verbrennungskraftmaschine ausgangsseitig eine als Abgasturbolader beschaffene Aufladeeinrichtung beaufschlagt, in der Größenordnung von etwa. 2 bar. Damit ergibt sich eine vergrößerte Druckdirfferenz zwischen dem realisierbaren Versorgungsunterdruck, der in der Größenordnung von 0,3 bar liegt, und dem erwähnten Ladedruckniveau von Δp zu 1,7 bar. Durch die erfindungsgemäß vorgeschlagene Beaufschlagung des elektropneumatischen Stellers mit dem Ladedruck, der einlassseitig an den Brennräumen der Verbrennungskraftmaschine zur Verbesserung der Zylinderfüllung ansteht, lässt sich bei gleichbleibender Membranfläche des elektropneumatischen Stellers eine wesentlich erhöhte Stellkraft realisieren.

Wird der erfindungsgemäß vorgeschlagene elektropneumatische Steller nun an Verbrennungskraftmaschinen insbesondere als Steller zur Betätigung des Stellgliedes "Wastegate" im Abgastrakt an einer Verbrennungskraftmaschine eingesetzt, so lässt sich dessen Stellkraft bei geschlossenem Stellglied, d.h. bei an einem Anschlag anliegendem Wastegate, erhöhen. In Wirkrichtung der Membranfeder, welche in ihrer Ruheposition, d.h. bei geschlossenem Anschlag, eine nur relativ geringe Kraft aufgrund der reinen Federvorspannung bereitstellt, wird der elektropneumatische Steller durch die das Stellglied beaufschlagende höhere Druckdifferenz nachhaltig unterstützt. Dadurch kann die Dichtkraft, die auf das am Anschlag anliegende Wastegate wirkt, signifikant erhöht werden.

Zur Realisierung der erfindungsgemäß vorgeschlagenen Lösung wird der elektropneumatische Steller derart modifiziert, dass anstelle eines bisher eingesetzten Luftfilters ein Anschlussstutzen, an dem Ladedruckniveau anliegt, bereitgestellt wird. An der Membran des elektropneumatischen Stellers kann durch eine Dichtung am Umfang des Membrankolbens eine mechanische Entlastung der Membran bei Überdrucksituationen innerhalb der Arbeitskammer geschaffen werden.

Bei einer Auslenkung des Stellgliedes aus seiner Ruheposition am Anschlag wird die Arbeitskammer des elektropneumatischen Stellers mit Ladedruck, anstelle wie bisher mit Atmosphärendruck, belüftet. In Ruheposition wird zur Bereitstellung der maximalen Stellkraft ( d.h. so zum Beispiel der Dichtkraft) ein Sollwert außerhalb des mechanisch erreichbaren Stellweges vorgegeben. Dies bewirkt, dass die Arbeitskammer des elektropneumatischen Stellers permanent mit einem über dem Atmosphärendruckniveau liegenden Ladedruckniveau beaufschlagt, d.h. belüftet ist und dort die maximale Druckdifferenz Δp ansteht.

Dem der Erfindung zugrunde liegenden Gedanken folgend, kann alternativ zu einer Schraubenfeder, welche die Membranfläche beaufschlagt, eine Luftfeder verwendet werden, welche ebenfalls durch den elektropneumatischen Steller permanent beaufschlagt ist.

Bei dieser alternativen Ausführungsform kann die gegenüberliegende Membranseite (Atmosphärenseite) ebenfalls mit Ladedruckniveau beaufschlagt werden. Dazu wird eine weitere Dichtung beziehungsweise eine weitere Membran beziehungsweise Membranfläche zur Atmosphärenseite verwendet sowie die Wirkrichtung vertauscht.

### Kurze Beschreibung der Zeichnungen

Anhand der Zeichnung wird die Erfindung nachstehend eingehender beschrieben. Es zeigt:
- Figur 1: Ansaug- und Abgastrakt einer Verbrennungskraftmaschine, mit in den Abgastrakt der Verbrennungskraftmaschine integrierter Aufladeeinrichtung samt Wastegate,
- Figur 2: einen Schnitt durch den erfindungsgemäß vorgeschlagenen elektropneumatischen Steller mit Stellkrafterzeugung,
- Figur 3: die Stellkrafterzeugung bei bisher eingesetzten elektropneumatischen Stellern und
- Figur 4: den Verlauf der Stellkraft aufgetragen über die Position einer Membranstange des erfindungsgemäß vorgeschlagenen elektropneumatischen Stellers mit Ladedruckunterstützung.

### Ausführungsformen

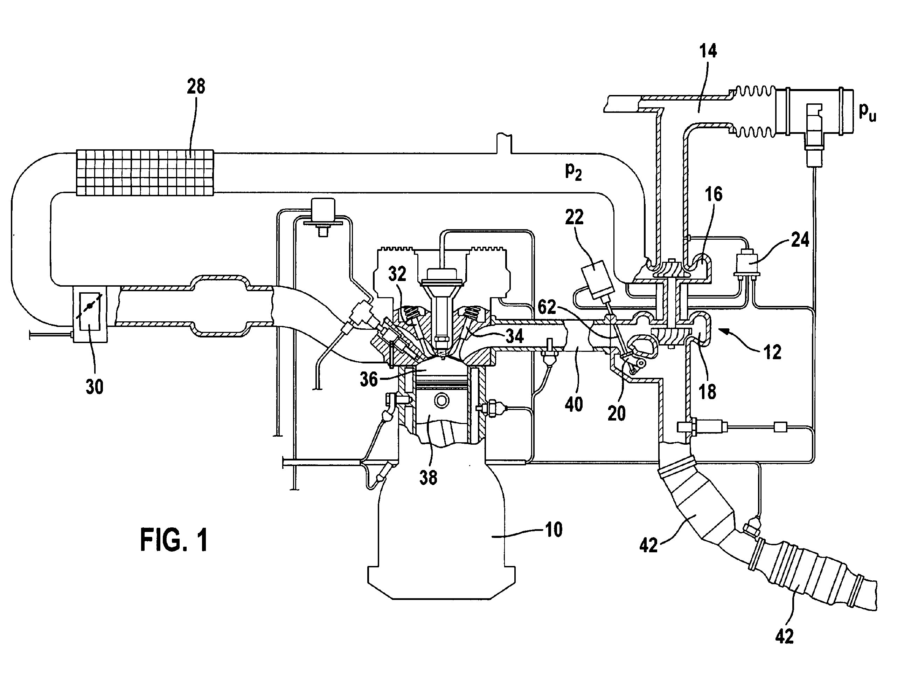

Figur 1 ist ein Ansaugtrakt und ein Abgastrakt einer Verbrennungskraftmaschine zu entnehmen, mit in den Abgastrakt der Verbrennungskraftmaschine integrierter Aufladeeinriehtung.

Wie Figur 1 zeigt, ist eine im Abgastrakt einer Verbrennungskraftmaschine 10 angeordnete Aufladeeinrichtung 12 als Abgasturbolader ausgebildet. Die Aufladeeinrichtung 12 umfasst einen Verdichterteil 16 und einen Turbinenteil 18. Der Verdichterteil 16 der Aufladeeinrichtung 12 saugt über ein Saugrohr 14 Frischluft aus der Umgebung an und verdichtet diese auf einen Ladedruck p₂. Der Ladedruck p₂ liegt in der Größenordnung von ca. 2 bar. Die auf den Ladedruck p₂ verdichtete Frischluft wird über einen Ladeluftkühler 28 einer Drosseleinrichtung 30 zugeführt, die der Verbrennungskraftmaschine 10 einlassseitig vorgeschaltet ist. Vor dem Verdichterteil 16 der Aufladeeinrichtung 12 herrscht Umgebungsdruck pᵤ.

Die auf Ladedruckniveau, d.h. auf den Ladedruck p₂ verdichtete Frischluft wird bei geöffnetem Einlassventil 32 in einem Brennraum 36 der Verbrennungskraftmaschine geführt und im Ausschiebetakt der Verbrennungskraftmaschine 10 bei geöffnetem Auslassventil 34 in den Abgastrakt geleitet.

Das Abgas der Verbrennungskraftmaschine strömt in den Turbinenteil 18 der Aufladeeinrichtung 12 ein und treibt den Turbinenteil 18 an, der wiederum den Verdichterteil 16 antreibt. Zur Regelung der Aufladeeinrichtung 12 ist dieser ein Wastegate 20 zugeordnet. Zur Betätigung des Wastegates 20 dient ein Wastegatesteller 22, der wiederum von einem Steller 24 betätigt wird. Mittels des Wastegates 20 kann ein Teilstrom des Abgases um den Turbinenteil 18 der als Abgasturboladers ausgebildeten Aufladeeinrichtung 12 herumgeführt werden. Am Wastegate 20 ist in dessen geschlossenem Zustand ein geringstmöglicher Leckagewert anzustreben. Das Wastegate 20, welches zum Beispiel als ein Tellerventil ausgebildet ist, erfährt im geschlossenen Zustand, d.h. in an einen Anschlag im Abgastrakt gestellter Position, sehr große Kräfte, die aus der Flächenpressung an einem Dichtbereich sowie Pulsationen im Abgas herrühren. Der Kraftbedarf, um das Wastegate 20 im geschlossenen Zustand dicht zu halten, steigt mindestens proportional zum Ladedruck p₂ an. Das Wastegate 20 wird über den Wastegatesteller 22 betätigt, der wiederum vom Steller 24 gesteuert wird. Am Steller 24 ist eine Unterdruckquelle 26 angeschlossen, so zum Beispiel eine an der Verbrennungskraftmaschine vorgesehene Unterdruckpumpe, über die zum Beispiel der Bremskraftverstärker beaufschlagt ist.

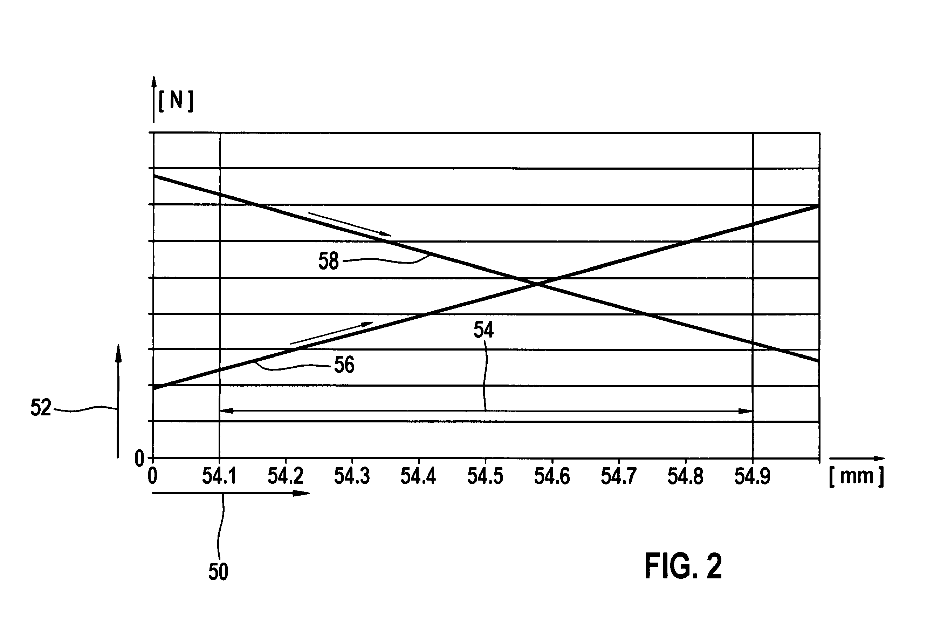

Figur 2 zeigt Stellkraftverläufe eines Wastegatestellers, sowohl eine Stellkraft in Druckrichtung als auch eine Stellkraft in Zugrichtung, wobei die sich einstellenden Stellkräfte über die Position der Membranstange des Wastegatestellers aufgetragen sind.

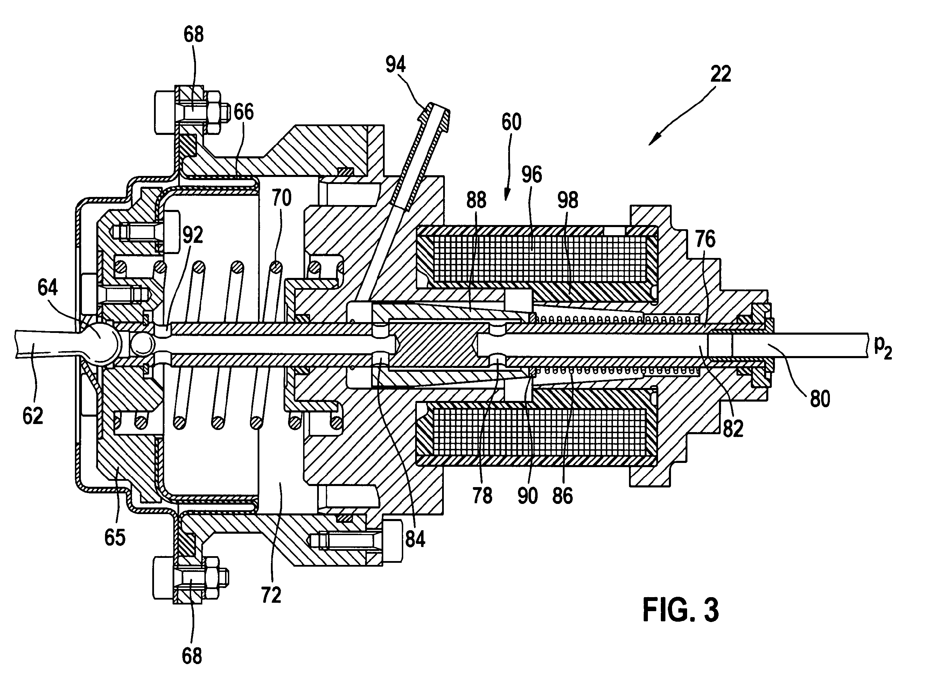

Figur 2 ist zu entnehmen, dass ein Stellweg einer Membranstange 76 (vergleiche Figur 3) des Wastegatestellers 22 durch Bezugszeichen 50 identifiziert ist, während der Stellkraftverlauf des Wastegatestellers 22 durch Bezugszeichen 52 bezeichnet ist. Eine sich innerhalb eines Betriebsbereiches 54 einstellende Position der Membranstange 76 (vergleiche Figur 3) ist durch die Bezugszeichen 54.1, 54.2, 54.3, ... bis 54.9 identifiziert. Bezugszeichen 56 bezeichnet die Stellkraft in Druckrichtung, aufgebracht durch den Wastegatesteller 22 in Druckrichtung, die mit entsprechender Vergrößerung des Stellweges, vergleiche Position 54.1 bis 54.9, kontinuierlich ansteigt. Eine Stellkraft in Zugrichtung, die durch den Wastegatesteller 22 aufzubringen ist und demnach das Wastegate 20 öffnet, ist durch Bezugszeichen 58 gekennzeichnet. Ausgehend von einer ersten Position 54.1 nimmt die Stellkraft 58 in Zugrichtung, die durch den Wastegatesteller 22 aufgebracht werden muss, kontinuierlich bis zur maximalen Position 54.9 ab. Die Stellkraftverläufe 56, 58 gelten für den Fall, dass der Wastegatesteller 22 mit Atmosphärendruck pᵤ beaufschlagt ist.

Der Darstellung gemäß Figur 3 ist ein Schnitt durch den erfindungsgemäß vorgeschlagenen Wastegatesteller zu entnehmen, welcher, anstelle mit Umgebungsdruck und einem Versorgungsunterdruck von etwa 0,3 bar, mit einem Ladedruck p₂ und dem Unterdruck in der Grö-βenordnung von 0,3 bar beaufschlagt ist und demzufolge eine höhere Stellkrafterzeugung zulässt.

Figur 3 zeigt, dass der Wastegatesteller 22 ein Gehäuse 60 umfasst. Am Gehäuse 60 ist in einem Gelenk 64 eine Stellstange 62 beweglich gelagert, über welche das Wastegate 20 (vergleiche Darstellung gemäß Figur 1) betätigt wird. Unter Betätigung des Wastegates 20 ist nachfolgend ein Öffnungs- beziehungsweise ein Schließhub des Wastegatestellers 22 zu verstehen.

Der in Figur 3 in der Schnittdarstellung dargestellte Wastegatesteller 22 umfasst neben dem Gehäuse 60, der Stellstange 62 und deren gelenkiger Lagerung bei Position 64 einen Deckel 65. Der Deckel 65 ist mit einer Membran 66 verbunden, die an Membranbefestigungen 68 mit dem Gehäuse 60 des Wastegatestellers 22 verbunden ist. Die Membranbefestigung 68 kann zum Beispiel in Form einer Schraubverbindung zwischen der Membran 66 und dem Deckel 65 erfolgen, oder über Nieten oder Verkleben oder dergleichen.

Wie aus der Darstellung gemäß Figur 3 hervorgeht, ist der Deckel 65 des Wastegatestellers 22 durch eine als Spiralfeder ausgebildete Membranfeder 70 beaufschlagt. Die Membranfeder 70 umschließt die Membranstange 76 und stützt sich am Deckel 65 einerseits und andererseits an einem Gehäuseeinsatz im Gehäuse 60 des Wastegatestellers 22 ab.

Die Membranstange 76 ist - wie in Figur 3 dargestellt - durch einen Ladedruck p₂ beaufschlagt. Demnach steht am in Figur 3 dargestellten rechten Ende der Membranstange 76 das Ladedruckniveau p₂ an, das einen ersten Kanal 82 der Membranstange 76 beaufschlagt. Die Membranstange 76 erstreckt sich im Wesentlichen in horizontaler Richtung und umfasst eine erste Querbohrung 78. Die erste Querbohrung 78 mündet unterhalb eines Ringspaltes, der unterhalb eines ferromagnetischen Schiebers 88 gebildet ist. Der hülsenförmig ausgebildete ferromagnetische Schieber 88 ist durch eine Regelfeder 86 beaufschlagt. Die Regelfeder 86 stützt sich an einem Gehäuseteil des Gehäuses 60 des Wastegatestellers 22 ab. Bei Beaufschlagung des ersten Kanals 82 mit dem Ladedruck p₂ steht dieser Ladedruck p₂ über die erste Querbohrung 78 am ferromagnetischen Schieber 88 an. Der durch die Regelfeder 86 beauf schlagte ferromagnetische Schieber 88 überdeckt eine zweite Querbohrung 84 der Membranstange 76. Entsprechend der Position des ferromagnetischen Schiebers wird über diese ein weiterer Kanal 83 der Membranstange 76 mit Ladedruckniveau p₂ beaufschlagt. Über den in der Membranstange 76 vorgesehenen, weiteren zweiten Kanal 83 steht der Ladedruck p₂ auch an einer dritten Querbohrung 92 der Membranstange 76 an, die in die Arbeitskammer 72 des Wastegatestellers 22 mündet. Der ferromagnetische Schieber 88 ist im Wesentlichen hülsenförmig ausgebildet und umfasst eine Anschlagscheibe 90. Aus der Darstellung gemäß Figur 3 geht des Weiteren hervor, dass die Membranstange 76 in dem Bereich, in dem diese vom ferromagnetischen Schieber 88 umschlossen ist, eine Spule 96 aufweist, die in einer Einbettung 98 aufgenommen ist. Eine Beaufschlagung der Arbeitskammer 72 erfolgt - wie in der Darstellung gemäß Figur 3 angedeutet - über einen Unterdruckstutzen 94.

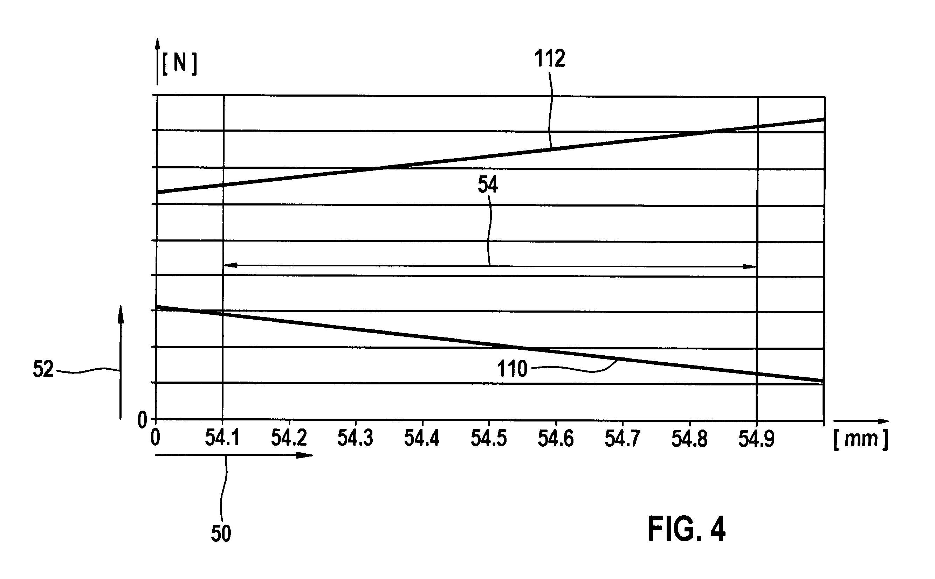

Aufgrund des Umstandes, dass bei dem erfindungsgemäß vorgeschlagenen Wastegatesteller 22 dessen Arbeitskammer 72 mit Ladedruckniveau p₂ anstelle von Umgebungsdruckniveau pu beaufschlagt ist, stellt sich eine Druckdifferenz zwischen dem Versorgungsunterdruck, der in der Regel in der Größenordnung von etwa 0,3 bar liegt, und dem Ladedruckniveau p₂ von etwa 1,7 bar ein. Diese Druckdifferenz Δp erlaubt die Erzeugung einer wesentlich höheren, in Druckrichtung der Membranstange 76 wirkenden Dichtkraft. Mit dieser höheren Druckkraft, vergleiche Figur 4, kann die Stellstange 62, die das Wastegate 20 im Abgastrakt der Verbrennungskraftmaschine 10 beaufschlagt, in Schließrichtung beaufschlagt werden, so dass das Wastegate 20 insbesondere in dessen geschlossener Position die erforderliche Flächenpressung zur Erzeugung einer Abdichtkraft aufbringt, als auch Druckpulsationen, die in der Abgasströmung der Verbrennungskraftmaschine vorliegen können, derart standhält, dass das Wastegate 20 durch den Wastegatesteller 22 aufgrund der erhöhten, in Druckrichtung wirkenden Stellkraft geschlossen gehalten werden kann.

Wie aus der Darstellung gemäß Figur 3 hervorgeht, ist die Membranstange 76 des Wastegatestellers 22 durch das Ladedruckniveau p₂ beaufschlagt. Das Ladedruckniveau p₂ steht über den ersten Kanal 82 an der ersten Querbohrung 78 unterhalb des ferromagnetischen Schiebers 88 an. Entsprechend des Öffnungsgrades der zweiten Querbohrung 84 der Membranstange 76 abhängig von der Position des ferromagnetischen Schiebers 88, wird der weitere zweite Kanal in der Membranstange 76, die in die dritte Querbohrung 92 und damit in die Arbeitskammer 72 mündet, mit Ladedruckniveau p₂ beaufschlagt. Der Druck, der in der Arbeitskammer 72 herrscht, wird geregelt als Funktion der Soll/Ist-Abweichung; diese Regelung erfolgt mit einem integrierenden Regler, der den Druck in der Arbeitskammer 72 zwischen den Grenzen, d.h. dem Unterdruck von etwa 0,3 bar und dem Ladedruckniveau p₂ in der Größenordnung von 2 bar regelt.

Der Darstellung gemäß Figur 3 ist des Weiteren zu entnehmen, dass die dort dargestellte Membranstange 76 des Wastegatestellers 22 unmittelbar durch das Ladedruckniveau p₂ beaufschlagt ist. Demnach kann an dieser Seite des Wastegatestellers 22 ein Luftfilter sowie ein vom Luftfilter überdeckter Körper, so zum Beispiel ein Luftfilterkäfig, vollständig entfallen, was die Einbaugröße des erfindungsgemäß vorgeschlagenen Wastegatestellers 22 in vorteilhafter Weise beeinflusst.

Aus der Darstellung gemäß Figur 3 geht ferner hervor, dass die Arbeitskammer 72 des Wastegatestellers 22 von der Membranfeder 70 durchzogen ist. Die Membranfeder 70 umschließt einerseits die Membranstange 76 und stützt sich andererseits an einer Innenseite der Membran 66 - bezogen auf die Arbeitskammer 72 - ab.

Die Funktionsweise des Wastegatestellers 22 gemäß Figur 3 stellt sich wie folgt dar.

Der erste Kanal 82 der Membranstange 76 wird durch das von der Aufladeeinrichtung 12 erzeugte Ladedruckniveau p₂ beaufschlagt. Der erste Kanal 82 der Membranstange 76 mündet in die erste Querbohrung 78, die von dem beweglich am Umfang der Membranstange 76 gelagerten ferromagnetischen Schieber 88 verschlossen ist. Der aus ferromagnetischem Material gefertigte Schieber 88 wird von der Regelfeder 86 beaufschlagt. Darüber hinaus umschließt der relativ zum Umfang der Membranstange 76 verschiebbare, hülsenförmig ausgebildete ferromagnetische Schieber 88 auch die zweite Querbohrung 84 der Membranstange 76. Entsprechend des Überdeckungsgrades der zweiten Querbohrung 84 durch den ferromagnetischen Schieber 88, gelangt Ladedruckniveau p₂ über einen weiteren zweiten Kanal 83, der koaxial zur Membranstange 76 diese durchzieht, zu einer dritten Querbohrung 92, die ihrerseits die Arbeitskammer 72 des Wastegatestellers 22 beaufschlagt. Entsprechend des Kräftegleichgewichtes, welches sich am ferromagnetischen Schieber 88, der das Stellglied darstellt und beweglich die Membranstange 76 mit darin ausgebildetem ersten Kanal 82 und zweitem Kanal 83 überdeckt, aufgrund der Bestromung der Magnetspule 56 abhängig von deren PWM-Signal und der Regelfeder 86 einstellt, wird das Ladedruckniveau p₂ entweder abgesteuert oder gelangt über die dritte Querbohrung 92 in die Arbeitskammer 72. Aufgrund dieses Umstandes kann in der Arbeitskammer 72 eine erheblich höhere Druckdifferenz Δp erzeugt werden, die sich aus der Differenz zwischen einem Unterdruckniveau in der Höhe von etwa 0,3 bar und dem Ladedruckniveau p₂, so zum Beispiel etwa 2 bar, ergibt. Dadurch lassen sich auf die Stellstange 72, die mittels des Gelenkes 64 am Deckel 65 angelenkt ist, erheblich höhere Kräfte aufbringen. So kann zum Beispiel das Druckpulsationen im Abgas der Verbrennungskraftmaschine ausgesetzte Wastegate 20 geschlossen gehalten werden und auch die zur Abdichtung des Wastegate-Bypasses erforderliche Dichtkraft auf das Wastegate 20 zuverlässig und mit einfachen Mitteln erzeugt und aufrecht erhalten werden. Wenngleich der elektropneumatische Steller 22 vorstehend im Zusammenhang mit dem Wastegate 20 der Aufladeeinrichtung 12 beschrieben wurde, so ist es selbstverständlich auch möglich, mit dem erfindungsgemäß vorgeschlagenen elektropneumatischen Steller 22 auch andere Komponenten an einer Verbrennungskraftmaschine 10, die eine Aufladeeinrichtung 12 zur Erzeugung eines Ladedruckniveaus p₂ aufweist, zu betätigen.

Der Darstellung gemäß Figur 4 ist der Stellkraftverlauf an einem elektropneumatischen Steller zu entnehmen, dessen Arbeitskammer anstelle mit Atmosphärendruck mit Ladedruckniveau p₂ beaufschlagt ist.

Wie aus der Figur 4 hervorgeht, stellt sich im Vergleich zum in Figur 2 dargestellten Stellkraftverlauf 56 in Druckrichtung eine Stellkraft ein, deren Betrag wesentlich höher liegt, vergleiche Bezugszeichen 112, zwischen den einzelnen Stellpositionen 54.1 bis 54.9 der Membranstange 76 beziehungsweise des stangenförmig ausgebildeten Stellgliedes 62. Der Darstellung gemäß Figur 4 ist außerdem zu entnehmen, dass der mit Bezugszeichen 110 bezeichnete Verlauf der Stellkraft auf einem wesentlich niedrigeren Niveau zwischen der ersten Position 54.1, die beispielsweise einem Stellweg von 2 mm entspricht, bis hin zu einer maximalen Stellposition 54.9 von zum Beispiel einem Stellweg von 18 mm verläuft.

Die in Druckrichtung wirkende, über den erfindungsgemäß vorgeschlagenen elektropneumatischen Steller 22 erzeugte erhöhte Stellkraft setzt sich zusammen aus der Druckkraft, die durch die Membranfeder 70 erzeugt wird, die den Deckel 65 des elektropneumatischen Stellers 22 von der Innenseite her beaufschlagt, und durch die Druckdifferenz Δp, die innerhalb der Arbeitskammer 72 herrscht. Die Druckdifferenz Δp ergibt sich aus der Differenz zwischen dem die Arbeitskammer 72 beaufschlagenden Ladedruckniveau p₂, welches ausgangsseitig am Verdichterteil der Aufladeeinrichtung 12 vorliegt, und dem Unterdruck in der Größenordnung von etwa 0,3 bar. Durch diese Druckdifferenz Δp kann insbesondere der Stellkraftverlauf 112 gemäß der Darstellung in Figur 4 in Druckrichtung erreicht werden.

## Patentansprüche

1. Verfahren zur Steuerung einer Kombination aus einer Aufladeeinrichtung (12) einer Verbrennungskraftmaschine und einem elektropneumatischer Steller (22) zur Betätigung von Aggregaten (20) der Verbrennungskraftmaschine (10), wobei der elektropneumatische Steller (22) ein Gehäuse (60) aufweist, in dem ein Stellglied (88) an einer Membranstange (76) beweglich geführt ist, **dadurch gekennzeichnet, dass** abhängig von der Relativposition des Stellgliedes (88) eine Arbeitskammer (72) im Gehäuse (60) entweder mit durch ein Verdichterteil (16) der Aufladeeinrichtung (12) auf Ladedruckniveau (p₂) verdichteter Luft belüftet ist, oder entlüftet ist, oder die Arbeitskammer (72) verschlossen ist

2. Verfahren gemäß Anspruch 1, **dadurch gekennzeichnet, dass** die Arbeitskammer (72) des elektropneumatischen Stellers von einer Membran (66) begrenzt ist, die durch eine Membranfeder (70) beaufschlagt ist.

3. Verfahren gemäß Anspruch 1, **dadurch gekennzeichnet, dass** das Ladedruckniveau (p₂) an einer Membranstange (76) anliegt, die einen ersten Kanal (82) und Querbohrungen (78, 84, 92) aufweist, die von dem Stellglied (88) umschlossen sind, das hülsenförmig und ferromagnetisch ausgebildet ist.

4. Verfahren gemäß Anspruch 3, **dadurch gekennzeichnet, dass** das Stellglied (88) von einer Regelfeder (86) beaufschlagt ist

5. Verfahren gemäß Anspruch 3, **dadurch gekennzeichnet, dass** das ferromagnetische Stellglied (88) abhängig von einer durch eine Magnetspule (96) erzeugten Magnetkraft den Querschnitt der zweiten Querbohrung (84) freigibt oder verschließt.

6. Verfahren gemäß Anspruch 3, **dadurch gekennzeichnet, dass** entsprechend der Position des ferromagnetischen Stellglieds (88) in Bezug auf die zweite Querbohrung (84) Ladedruckniveau p2 über die dritte Querbohrung (92) der Membranstange (76) in der Arbeitskammer (72) ansteht und die Membran (66) an deren Innenseite beaufschlagt.

7. Verfahren gemäß Anspruch 1, **dadurch gekennzeichnet, dass** die Membran (66) von einer Dichtung in Umfangsrichtung umschlossen ist

8. Verfahren gemäß Anspruch 1, **dadurch gekennzeichnet, dass** eine ein Wastegate (20) der Aufladeeinrichtung (12) betätigende Stellstange (62) am Deckel (65) des elektropneumatischen Stellers (22) in einem Gelenk (64) aufgenommen ist.

9. Verfahren gemäß Anspruch 3, **dadurch gekennzeichnet, dass** sich die Membranstange (76) durch die Arbeitskammer (72) erstreckt.

10. Verfahren gemäß Anspruch 3, **dadurch gekennzeichnet, dass** die Membranstange (76) einen ersten Kanal (82) und einen von diesem getrennten zweiten Kanal (83) umfasst, deren Querbohrungen (78, 84) vom ferromagnetischen Stellglied (88) überdeckt sind, und die Beaufschlagung des zweiten Kanals (83) mit Ladedruckniveau p2 vom Überdeckungsgrad des ferromagnetischen Schiebers (88) in Bezug auf die zweite Querbohrung (84) abhängt.

## Claims

1. Method for controlling a combination of a supercharging device (12) of an internal combustion engine and an electropneumatic actuator (22) for operating assemblies (20) of the internal combustion engine (10), wherein the electropneumatic actuator (22) has a housing (60) in which an actuating element (88) is guided in a movable manner on a diaphragm rod (76), **characterized in that**, depending on the relative position of the actuating element (88), a working chamber (72) in the housing (60) is either aerated with air compressed to charge pressure level (p₂) by a compressor part (16) of the supercharging device (12), or is ventilated, or the working chamber (72) is closed.

2. Method according to Claim 1, **characterized in that** the working chamber (72) of the electropneumatic actuator is delimited by a diaphragm (66) which is acted on by a diaphragm spring (70).

3. Method according to Claim 1, **characterized in that** the charge pressure level (p₂) acts on a diaphragm rod (76) which has a first duct (82) and transverse bores (78, 84, 92) which are surrounded by the actuating element (88) which is of sleeve-shaped and ferromagnetic form.

4. Method according to Claim 3, **characterized in that** the actuating element (88) is acted on by a regulating spring (86).

5. Method according to Claim 3, **characterized in that** the ferromagnetic actuating element (88) opens up or closes off the second transverse bore (84) as a result of a magnet force generated by a magnet coil (96).

6. Method according to Claim 3, **characterized in that**, in accordance with the position of the ferromagnetic actuating element (88) in relation to the second transverse bore (84), charge pressure level (p₂) prevails in the working chamber (72) via the third transverse bore (92) of the diaphragm rod (76) and acts on the inner side of the diaphragm (66).

7. Method according to Claim 1, **characterized in that** the diaphragm (66) is surrounded in the circumferential direction by a seal.

8. Method according to Claim 1, **characterized in that** an actuating rod (62) which operates a wastegate (20) of the supercharging device (12) is held on the cover (65) of the electropneumatic actuator (22) at a joint (64).

9. Method according to Claim 3, **characterized in that** the diaphragm rod (76) extends through the working chamber (72).

10. Method according to Claim 3, **characterized in that** the diaphragm rod (76) comprises a first duct (82) and, separate from the latter, a second duct (83), the transverse bores (78, 84) of which are covered by the ferromagnetic actuating element (88), and the charging of the second duct (83) with charge pressure level (p₂) is dependent on the extent to which the ferromagnetic slide (88) covers the second transverse bore (84).

## Revendications

1. Procédé de commande d'une combinaison d'un dispositif de suralimentation (12) d'un moteur à combustion interne et d'un régulateur électropneumatique (22) pour l'actionnement de groupes (20) du moteur à combustion interne (10), le régulateur électropneumatique (22) comprenant un boîtier (60) dans lequel un actionneur (88) est guidé de manière mobile contre une tige de membrane (76), **caractérisé en ce qu'**en fonction de la position relative de l'actionneur (88), de l'air comprimé par une partie de compresseur (16) du dispositif de suralimentation (12) à un niveau de pression de suralimentation (p₂) est soit introduit dans une chambre de travail (72) dans le boîtier (60) soit évacué de cette dernière, ou bien la chambre de travail (72) est fermée.

2. Procédé selon la revendication 1, **caractérisé en ce que** la chambre de travail (72) du régulateur électropneumatique est délimitée par une membrane (66) qui est sollicitée par un ressort de membrane (70) .

3. Procédé selon la revendication 1, **caractérisé en ce que** le niveau de pression de suralimentation (p₂) est appliqué sur une tige de membrane (76) qui comprend un premier canal (82) et des alésages transversaux (78, 84, 92) qui sont entourés par l'actionneur (88) qui est réalisé en forme de douille et est ferromagnétique.

4. Procédé selon la revendication 3, **caractérisé en ce que** l'actionneur (88) est sollicité par un ressort de réglage (86).

5. Procédé selon la revendication 3, **caractérisé en ce que** l'actionneur ferromagnétique (88) libère ou ferme la section transversale du deuxième alésage transversal (84) en fonction d'une force magnétique produite par une bobine magnétique (96).

6. Procédé selon la revendication 3, **caractérisé en ce qu'**en fonction de la position de l'actionneur ferromagnétique (88) par rapport au deuxième alésage transversal (84), le niveau de pression de suralimentation p₂ s'établit dans la chambre de travail (72) par l'intermédiaire du troisième alésage transversal (92) de la tige de membrane (76) et sollicite la membrane (66) sur son côté intérieur.

7. Procédé selon la revendication 1, **caractérisé en ce que** la membrane (66) est entourée par un joint d'étanchéité dans la direction périphérique.

8. Procédé selon la revendication 1, **caractérisé en ce qu'**une tige de commande (62) actionnant une soupape de décharge (20) du dispositif de suralimentation (12) est reçue dans une articulation (64) au niveau du couvercle (65) du régulateur électropneumatique (22).

9. Procédé selon la revendication 3, **caractérisé en ce que** la tige de membrane (76) s'étend à travers la chambre de travail (72).

10. Procédé selon la revendication 3, **caractérisé en ce que** la tige de membrane (76) comporte un premier canal (82) et un deuxième canal (83) séparé du premier, dont les alésages transversaux (78, 84) sont recouverts par l'actionneur ferromagnétique (88), et la sollicitation du deuxième canal (83) par le niveau de pression de suralimentation p₂ dépend du degré de recouvrement du coulisseau ferromagnétique (88) par rapport au deuxième alésage transversal (84).
